# EUROPEAN PATENT SPECIFICATION

(11) **EP 4 363 967 B1**
(45) Date of publication and mention of the grant of the patent: **25.02.2026**
(21) Application number: 21948600.8
(22) Date of filing: 30.06.2021
(51) Int. Cl.: H04L 67/00, H04W 8/24, G06F 8/65, G06F 8/658

(54) **MANAGING A COMMUNICATION DEVICE SOFTWARE VERSION**
VERWALTUNG EINER SOFTWAREVERSION EINER KOMMUNIKATIONSVORRICHTUNG
GESTION D'UNE VERSION DE LOGICIEL DE DISPOSITIF DE COMMUNICATION

(43) Date of publication of application: 08.05.2024
(73) Proprietor: Telefonaktiebolaget LM Ericsson (publ), 164 83 Stockholm (SE)
(72) Inventor: DA SILVA, Icaro Leonardo, 170 77 Solna (SE); MILDH, Gunnar, 192 55 Sollentuna (SE); NÁDAS, Szilveszter, Santa Clara, CA 95054 (US); PONGRÁCZ, Gergely, 1223 Budapest (HU); TURÁNYI, Zoltán Richárd, 2000 Szentendre (HU)
(74) Representative: Ericsson
(86) International application number: PCT/SE2021/050654
(87) International publication number: WO 2023/277742

(56) References cited:
- EP-A1- 2 256 626
- EP-A1- 2 993 578
- US-A1- 2007 118 507
- US-A1- 2012 096 104
- US-A1- 2019 303 129
- US-A1- 2020 097 277
- US-A1- 2020 137 559
- US-A1- 2020 374 184

## Description

### TECHNICAL FIELD

The disclosure herein relates to a communication device and a network node in a wireless communication network and methods thereof. In particular the embodiments relate to managing a software version in a communication device. Computer programs and a computer program product are also disclosed.

### BACKGROUND

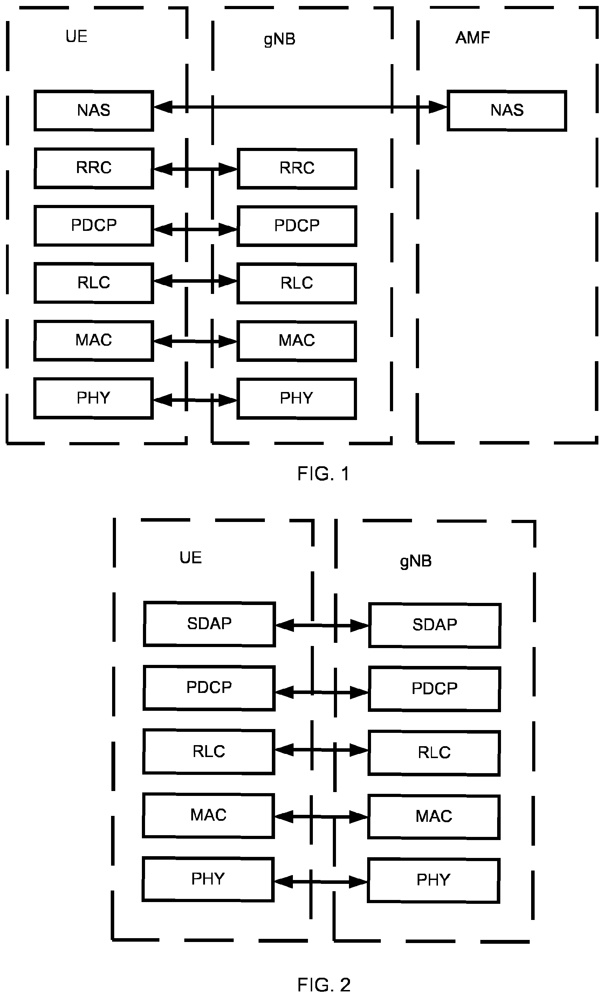

In 3^{rd} Generation Partnership (3GPP) systems, such as 5^{th} Generation (5G) New Radio (NR) and Long-Term Evolution (LTE) various protocols form a protocol stack for communication between a user equipment (UE) and a radio access network (RAN). The protocol stack can be divided into Control Plane (for signaling), see Figure 1, and User Plane (for data) see Figure 2.

For the Control Plane, the package data convergence protocol (PDCP), radio link control (RLC), medium access control (MAC) and Radio Resource Control (RRC) terminate in a gNodeB (gNB) on the network side. The Non-access stratum (NAS) control protocol terminates in the Access and Mobility Management Function (AMF) on the network side, see Figure 1. The User Plane may comprise sublayers such as Service Data Adaption Protocol (SDAP), PDCP, RLC and MAC which terminate in a gNB on the network side, see figure 2.

The functions executed by these protocols are specified in 3GPP specifications, e.g. the main control plane protocol, RRC, is specified in 3GPP TS 38.331 V 16.1.0, which discloses the following protocol functions for implementation at the UE side:
- Broadcast of System Information related to Access Stratum (AS) and NAS;
- Paging initiated by 5G Core (5GC) or Next Generation Radio Access network (NG-RAN)
- Establishment, maintenance and release of an RRC connection between the UE and NG-RAN including:
   o Addition, modification and release of carrier aggregation;
   o Addition, modification and release of Dual Connectivity in NR or between Evolved Universal mobile Telecommunications System Terrestrial Radio Access (E-UTRA) and NR.
- Security functions including key management;
- Establishment, configuration, maintenance and release of Signaling Radio Bearers (SRBs) and Data Radio Bearers (DBRs);
- Mobility functions including:
   ∘ Handover and context transfer;
   ∘ UE cell selection and reselection and control of cell selection and reselection;
   ∘ Inter- Radio Access Technology (RAT) mobility;
- Quality of Service (QoS) management functions;
- UE measurement reporting and control of the reporting;
- Detection of and recovery from radio link failure;
- NAS Message transfer to/from NAS from/to UE.

Sidelink (SL) specific services and functions of the RRC sublayer over a Uu interface include:
- Configuration of SL resource allocation via system information or dedicated signaling;
- Reporting of UE SL information;
- Measurement configuration and reporting related to SL;
- Reporting of UE assistance information for SL traffic pattern(s).

Once these functions are specified UE manufacturers can implement them according to these specifications so that a network manufacturer can implement the counter-part of these functions taking into account what has been specified.

However, UE behavior that a network manufacturer can explore when programming a software is limited to what has been specified. For example, a network vendor can design a handover algorithm based on A1-A6 events, see TS 38.331. V 16.1.0, clauses 5.5.4.1-5.5.4.7, to take a handover decision under a certain configuration and process measurement report. Further, the introduction of a new event, a new trigger, and/or a new report associated with a handover decision would require standardization.

Recent initiatives such as a separation between Control Plane and User Plane functions, and the opening of Application Programming interfaces (APIs) that could be used by a third party so that control functions could be programmed, may open up for new ideas in the 5G Core Network. In addition, virtualization and cloud technologies have been used to program APIs on the network side.

In the RAN domain, initiatives in the area of RAN programmability have also started to emerge. However, they have been limited to initiatives to open API(s) on the network side, so that a third part vendor could use these opened API(s) to program algorithms.

The benefits are limited to functions and/or features, terminals and/or UEs would support in a given version of the 3GPP specifications. In other words, while a programmer benefitting from opened API's could design a new scheduling algorithm, the programmer cannot substantially influence the type of information a terminal reports, or some specific behavior of the UE upon receiving a given command: these would have to be introduced via standardization.

Even if the UE behavior is updated in the standards, network vendors must support legacy behavior for a long period of time. This makes standardization cautious, and also network design more and more complex as the given generation of mobile network evolves.

One of the main problems that exists to realize a UE programmability framework for a 3GPP protocol stack is a synchronization of the network and the UE and ensure that they are running compliant software or Firmware versions of a given protocol stack.

A UE is as such not exclusively designed to operate with a given network product manufacture and a mobile network vendor, hence it is problematic to have a programable UE from a protocol perspective that is able to use mobile services in networks from different manufacturers and mobile operators.

Patent application US 2020/097277 A1 discloses methods, systems, and computer readable media for loT (Internet of Things) device updating.

Patent application US 2020/137559 A1 discloses a method and apparatus for managing content of wireless equipment over-the-air.

### SUMMARY

The invention is defined by the claims.

### BRIEF DESCRIPTION OF THE DRAWINGS

The disclosure is now described, by way of example, with reference to the accompanying drawings, in which:
- Figure 1: illustrates protocol stacks comprised within the control plane;
- Figure 2: illustrates protocol stacks comprised within the user plane;
- Figures 3,3A,3B,3C: are flow charts of methods of managing a communication device's software version;
- Figure 4: is a flow chart of a method of managing a communication device's software version;

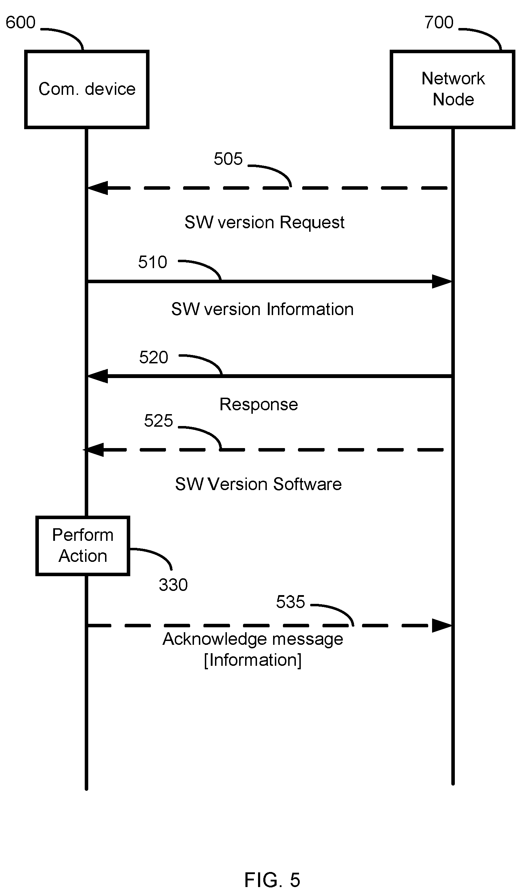

- Figure 5: is a signal diagram of signaling between a communication device and a network node for managing a communication device's software version;
- Figure 6: is a block diagram of a communication device according to an embodiment;
- Figure 7: is a block diagram of a network node according to an embodiment.

### DETAILED DESCRIPTION

The disclosure will now be described more in detail hereinafter with reference to the accompanying drawings, in which certain embodiments of the disclosure are shown. This disclosure may, however, be embodied in many different forms and should not be construed as limited to the embodiments set forth herein; rather, these embodiments are provided as examples of embodiments within the claimed scope.

One of the main problems that exist to realize a communication device programmability framework for a 3GPP protocol stack or equivalent is a synchronization of a network and the communication device so that there is a certainty that both the network and the communication device are running the same or compliant software versions of a given protocol stack.

A second problem is that in order to utilize the new wireless device capabilities related to programmability, it is required that the provider (i.e. the network node) of the downloadable configurations are aware of the devices capabilities, and that these capabilities are expressed in a format that the provider understands.

An advantage of the embodiments of the disclosure will be an increased flexibility in the implementations of new features to a communication device. For example, stakeholders will be able to design different software-based protocol functions that would enable a high level of differentiation among different stakeholders.

Another advantage is that device and methods described herein would enable, or at least facilitate for a communication device to move to different networks or network areas and utilize different SW stacks in these areas. This can significantly reduce the latency when the communication device moves between areas or networks using different stacks.

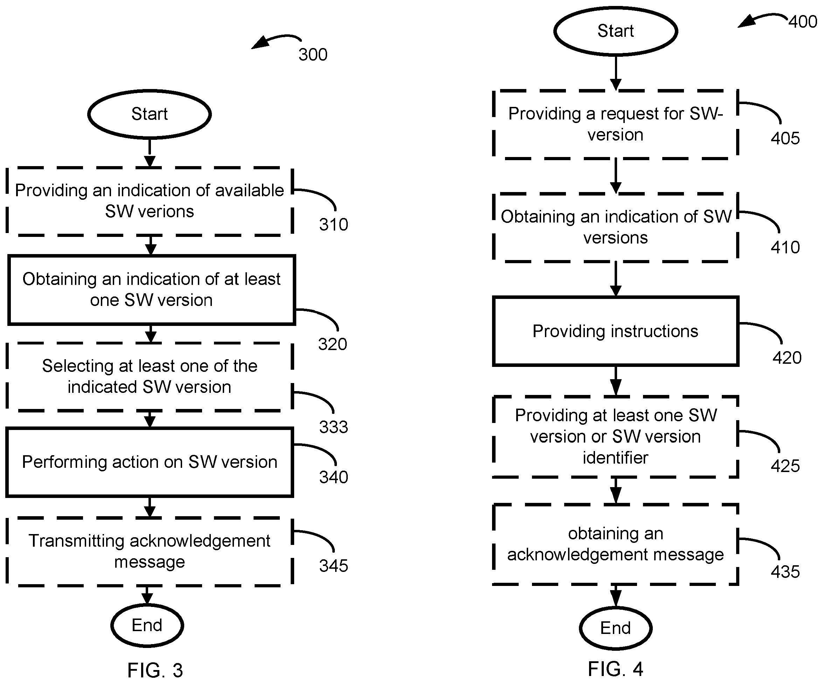

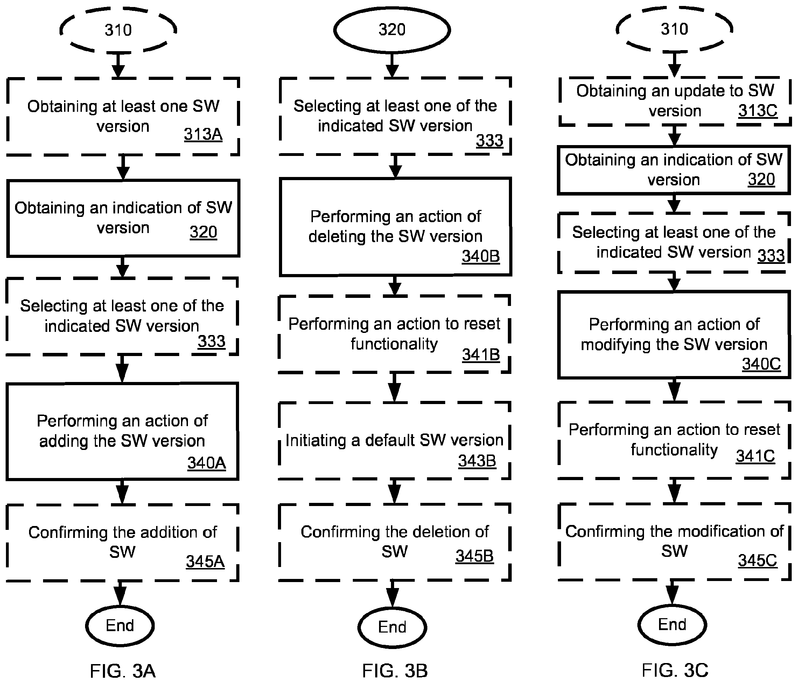

Figure 3 is a flow chart illustrating embodiments of methods for managing software versions of a communication device.

A method 300 is performed by a communication device for managing a software (SW) version in the communication device. The method for managing the SW version in the communication device comprises, obtaining 320 an indication of at least one network indicated SW version from a network node, and the communication device performing 340 at least one action on the network indicated SW version. At least two SW versions are stored in the communication device in relation to a same Subscriber Identity Module (SIM) comprised in the communication device in e.g. a UICC, an eUCC, and an iUICC thereby enabling the communication device to manage the communication device's software versions.

The indication of the at least one network indicated SW version indicates the SW version(s) the communication device performs management actions upon.

In the performing 340 step illustrated in Figure 3, the communication device performs management actions on network indicated SW versions indicated in the obtained network indication of SW versions.

As such the communication device can perform different actions on different SW versions depending upon the indications obtained from the network node.

In an optional step, *providing 310 an indication of available SW versions,* illustrated in Figure 3, the communication device provides at least one indication of at least one available SW version stored in the communication device to the network node. Thus, enabling the network node to provide indications for any one of the available SW versions an indication was provided for by the communication device and stored in the communication device. Further, if none of the provided indications of available SW versions are compatible with the network, the network is made aware of this and is enabled to perform actions to remedy a lack of compatible SW versions in the communication device. The optional step may be performed in response to a request from a network node for available SW versions stored at the communication device. The optional step may be performed: as a mobility registration update, during a connection procedure, during an initial access procedure, or during a state transition to RRC_CONNNECTED.

In a further optional step, *selecting 333 at least one of the indicated SW versions,* illustrated in figure 3, the communication device selects any one of the network indicated SW versions. For example, when the communication device receives indications for two or more network indicated SW versions, the selecting may be utilized to perform a management action upon any one of the network indicated SW version. The selecting of at least one of the indicated SW versions may enable the communication device to perform an action on a subset of the at least two network indicated SW versions. This is advantageous as it enables the communication device to perform different actions upon different network indicated SW version. Furthermore, such a selection may be based upon external qualities, e.g. of a network instance, to which the communication device may prefer to connect to. A network instance may be at least one of the following: a public land mobile network (PLMN), a mobile network operator (MNO), a network slice instance (e.g. indicated by a network slice subset instance (NSSI)), and a network vendor identification.

In an optional transmitting 345 step, the communication device transmits 345 an acknowledge message to the network node, to acknowledge the performing of the action for example, the adding, deleting, modifying, activation or deactivation, on the network indicated SW version. The acknowledge message may in some embodiments, be transmitted using the network indicated SW version (e.g. after adding the network indicated SW, before deleting the network indicated software, before or after modifying the network indicated software, after activating the network indicated software, before deactivating the network indicated software), as such to confirm the acknowledgement of the instructions to be performed or has been performed.

Illustrated in Figure 4 is a method performed by a network node for managing a software version of a software associated with a communication device. The method 400 comprises providing 420, to a communication device, an instruction comprising an indication of at least one network indicated SW version and an instruction for at least one action to be performed on the at least one network indicated SW version. In an embodiment, the instruction which comprises an indication of at least one network indicated SW version also acts as the instruction for the action to be performed.

Further illustrated in Figure 4 is an optional step *Providing 405 request for SW- version,* wherein the network node provides a request to the communication device for an indication of available SW-version.

In another optional step *obtaining 410 an indication of SW versions* the network node obtains, from the communication device, an indication of available software versions stored in a communication device. The obtaining may be the network node receiving the indication of available software versions stored in a communication device in a message, such as an RRC or NAS message. The indication of available software versions can for example be a list, a file, or several independent messages each indicating one available software version stored at the communication device. In an embodiment, the indication of available software versions stored in the communication device indicates a subset of all available software versions stored at the communication device.

In yet another optional step, illustrated in Figure 4, *providing at least one SW version or SW version identifier 425* the network node provides, to the communication device, at least one SW version or SW version identifier. In case the network node has obtained an indication of SW versions available at the communication device in this step, the indication may be for at least one network indicated SW version indicating any one of the provided SW versions, or the SW versions available in the communication device. Thus, providing the communication device with an indication for a software version which can be acted upon.

In a further optional step *obtaining an acknowledge message* 435 the network node obtains an acknowledge message of an action performed by the communication device on a SW version.

In some embodiments of the optional step providing 310 an indication of at least one available SW version, the communication device indication indicates none, or one and more or all the available SW version stored on the communication device. This may be dependent upon the SW versions comprised on the communication device, if any. The providing 310 an indication of at least one available SW version may, for example, be performed during an initial registration, an attach procedure, a registration area update or a PLMN reselection, performed by the communication device. Herein, available SW versions are understood to be SW versions the communication device has stored for example in a communication device variable, in a subscriber identity module (SIM) card on the communication device, or in the communication device's chipset e.g. in a data storage systems. The indication of at least one available SW version may be a SW version identifier. As such, a SW version may be associated with a SW version identifier.

In other words, the SW version identifiers can identify their associated SW version. Such an identifier could be a SW version ID.

In further embodiments, the *obtaining 320 an indication of at least one SW version,* comprise the communication device obtaining one or more SW versions. The SW versions may be obtained from for example, a location such as a server address, or from the network node. In other words, the communication device may obtain the at least one SW version from a server address by downloading the SW version or receiving the at least one SW version in a message from a network node.

In other embodiments, the *performing 340 action on SW version,* comprises performing managing actions such as adding, deleting, modifying, activating, or deactivating a SW version. Herein, adding a software version means that the communication device stores a SW version on a data storage system, as such the SW version can be utilized by the communication device (e.g. activated and procedures and functions of the SW version utilized), and deleting is removing the SW version from a data storage system thus, enabling the storage space previously utilized by the SW version to be utilized for other means. Modifying the SW version may be or comprise replacing the SW version with an updated SW version of the same kind, managing or updating parameters comprised within the SW version, or performing patches (minor corrections or modifications) to the current SW version.

Figures 3A-3C illustrate optional implementation embodiments of the method illustrated in Figure 3.

In an optional method illustrated in fig 3A, the at least one action performed on the network indicated SW version comprise adding 340A the network indicated SW version to a data storage comprised on the communication device. To add the network indicated SW version to the storage, the communication device may obtain 313A one or more SW versions. In other words, the communication device may receive a command message from the network node, and in response to such a command message add a software indicated by the network in the command message to a data storage comprised in the communication device.

In even further embodiments the communication device obtains at least one SW version from a network node, wherein the obtained indication of a network indicated SW version is an indication of the obtained SW version. The communication device is enabled to perform the at least one action upon the obtained, network indicated SW version.

The communication device may obtain a message from the network node, the message comprising a list. The list comprises elements wherein one or more elements of the list comprises one or more SW version, and their respective SW version identifier. Alternatively, the SW version identifiers are comprised in one or more other elements of the list. In some embodiments the element comprising a SW version is the same element comprising the associated SW version identifier. Further, the obtained indication of the network indicated SW version, may be an indication to at least one of the obtained SW versions, and the performing at least one action may further comprise storing the obtained, network indicated SW version and the obtained network indicated SW version's associated SW version identifier in the data storage of the communication device.

In some embodiments the communication device obtains the SW version and SW version identifier associated with the SW version, in a list structure such as an AddModList structure. Alternatively, in some embodiments the communication device obtains a location of a SW version e.g. a server address and an associated SW version identifier in a list structure.

When added to the communication device's storage system these obtained SW versions may for example be stored in a UE variable for example VarSW-Version in the example below.

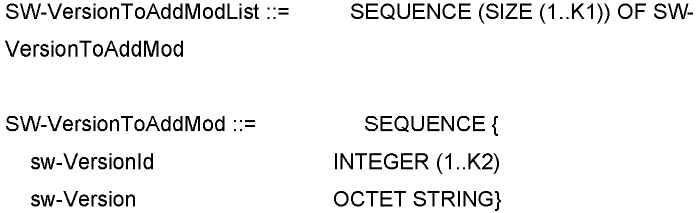

In the example above, the communication device shall for each SW-Version ID included in the obtained SW-VersionToAddModList store (e.g. add to a data storage ) an entry for this SW-Version ID within the VarSW-Version, i.e. store the SW-Version within the VarSW-version.

Alternatively, if each element of the list above comprises a SW version identifier a location (e.g. an address information such as an IP address of a server) of the SW version, where the SW version can be obtained (e.g. downloaded).

The communication device may receive a message from the network, the message comprising a list wherein each element of the list comprises a SW version identifier and an address location. Further, the obtained indication may be an indication to at least one of the listed SW version identifiers, and the communication device obtaining the SW version associated with the SW version identifier from the address location. The communication device may perform at least an action comprising storing the network indicated SW version and the associated SW version identifier in the data storage system of the communication device. Further, such an address location may comprise more than one SW version.

The communication device downloads the indicated SW versions (as such obtains/receives the software version) and stores each obtained SW version a data storage, and optionally alongside with their associated SW version identifier. A single location may be the location for more than one SW version. In other words, the communication device may receive a common address information for more than one SW version, as such the communication device can obtain several SW versions from a single address.

For example, for a message received with the below parameters.

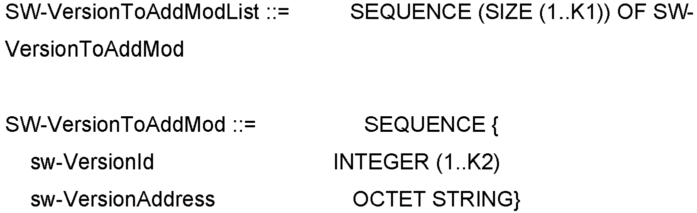

The communication device may for each sw-Versionld included in the received sw-VersionToAddModList download for this sw-Versionld the associated SW version using the address in the associated sw-VersionAddress. Further, the communication device may add a new entry (i.e. store) for this sw-Versionld within the VarSW-Version including the downloaded SW version associated to the sw-Versionld.

In an embodiment of the invention wherein the communication device adds one or more SW version to data storage in the communication device they may all be considered to be deactivate. Alternatively, upon adding one or more SW versions to the communication device all SW versions may be considered to be deactivated except for SW versions indicated to be active.

Further, after adding an indicated SW version the communication device may transmit 345A an acknowledge message. The acknowledge message may indicate the addition of the indicated SW version. In some embodiments, the transmission is performed prior to the adding of the indicated SW version as an acknowledgement message of receiving the instructions to add an indicated SW version. The acknowledgement message may be a transmission utilizing the SW version that was added to the communication device. In other words, the transmission may utilize the functions or settings comprised within the SW version to perform the transmission, or utilizes the functions or settings available for the next transmission and as such perform the transmission of the acknowledge message.

In a further embodiment, illustrated in Figure 3B, the communication device, while performing an action on a network indicated SW version, performs an action to delete (i.e., remove from a data storage comprised on the communication device) 340B the network indicated SW version stored on the communication device. As such, the action performed further comprises deleting 340B a SW version.

Further, the indication may comprise at least one SW identifier, indicating the at least one SW version. In other words, the indication for at least one network indicated SW version may be a SW identifier associated with the network indicated SW version.

In one embodiment multiple SW versions are removed/deleted at the same time. In one embodiment one indication of at least one network indicated SW version indicate only one network indicated software version. Alternatively, one or more indication of at least one network indicate SW version may together comprise indications for two or more network indicated SW versions. Further the indication may comprise several SW identifiers in a list structure, each SW identifier indicates their associated SW version.

An example of deleting a SW version may comprise the communication device obtaining or receiving, a message with the below parameters:

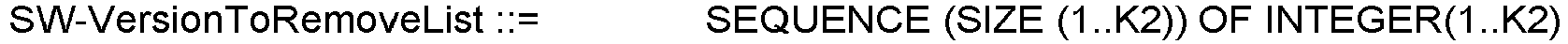

In the example above, the communication device may, for each sw-Versionld included in the SW-VersionToRemoveList that is accessible to the communication device, e.g. in a VarSW-Version list, remove the entry with the matching sw-Versionld from the VarSW-Version List.

If the indication indicates a SW version that the communication device is running, the method may further comprise the communication device performing an action to reset the functionality 341B associated with the network indicated SW that is removed. Such an action may comprise anyone of more of a resetting of protocol entities, cleaning information buffers, resetting protocol variables, removal of configurations generated according to specifics comprised within the indicated software version, or a transitioning to an IDLE state. Further examples of actions that may be performed may be a reset of MAC, setting a variable e.g. pending RNA-Update to false, stopping a timer, starting a timer, etc (3GPP TS 38.331 V 16.1.0, Clause 5.3.11).

In further embodiments, the communication device initiates 343B a default SW version after deleting a running SW version. As used herein a default SW may be a software version that is stored on the communication device that is initiated when there is no currently running software to perform a function. (e.g. a specific protocol software for performing functions such as handover, authentication etc)

The communication device may indicate the deletion of the SW version, for example to upper layers or to the network node.

Further, after deleting the network indicated SW version the communication device may transmit 345B an acknowledge message. The acknowledge message may indicate the deletion of the indicated SW version. In some embodiments the acknowledge message is transmitted before the deletion of the network indicated SW version, as an acknowledgement of the instructions to delete the network indicate SW version.

Further, in one embodiment an instruction to delete a SW version is obtained in an RRC message e.g. from a Radio Access node, or in a NAS message e.g. from a Core Network Function, or from an Over the top applications.

In an embodiment the deleting of the indicated software is in response to the occurrence of an event. For example, if the communication device performs a state transition the communication device deletes the network indicated software. For example, if the wireless device transitions to an RRC_IDLE state, then the wireless device deletes a SW version for RRC_CONNECTED.

In figure 3C there is illustrated an optional method for modifying a SW version, the software version being stored on a communication device.

In an embodiment the performing an action comprises modifying a SW version stored on the communication device. The modification may be for example updating, patching, and/or replacing the indicated SW version or features thereof. In other words, the actions may comprise replacing the at least one network indicated SW version with at least one new SW version (the one new SW version may be provided from the network node, or it may be indicated to be obtained from e.g. an address location), or to update or modify at least one parameter associated with the network indicated SW version.

Further, in an embodiment, the communication device obtains 313C one or more SW version, or an updated parameter associated with a network indicated SW version. Even further, the communication device may obtain new SW versions from a location, e.g. a server address. As such the communication device has been enabled to update the indicated SW version with the provided new SW version or parameter.

In some embodiments the SW version to be modified is a SW version that has been provided to the communication device by a network node. In other words, the indication of a SW version to be modified is indicating a SW version that the communication device will obtain (e.g. receive in a message or download from a location), obtains concurrently with the indication, or obtained prior to obtaining the indication of a SW version to be modified. For example, the communication device is provided with a parameter to update the new SW version, the new SW is obtained by downloading the SW version from a location, e.g. an address location, or a server indicated by for example, a uniform resource locator.

In an embodiment, the communication device receives a message from a network node. The message comprises SW identifiers to indicate a SW version.

In an embodiment illustrate in Figure 3C in the obtaining 320 step the communication device receives a message from the network node. The message may comprise a list wherein each element of the list comprises a SW version and an associated SW version identifier. The obtained indication may be an indication of at least one of the SW versions stored on the communication device, alternatively the indication may be an indication of at least one SW version obtained from the network node. As such, performing the action, may comprise performing an action to add 340A or modify 340C the indicated SW version and its associated SW version identifier in the data storage of the communication device. For example, utilizing the obtained SW version and associated SW identifier.

Alternatively, method 300 the communication device may receive a message from the network node comprising a list of SW version identifiers, and an associated location address. The obtained location address may be utilized to download the SW version associated with the SW version identifier.

The method may further indicate a SW version that the communication device is currently running. If the SW version currently running is the network indicated SW to be deleted or modified, the communication device may perform 341B, 341C, at least one action to reset the functionality associated with the deleted or modified SW version. Such actions may comprise any one or more of resting of protocol entities, a clearing / clearing of information buffers, a reset of protocol variables, a removal of configurations, specifically configured for the network indicated software version, a transition to an IDLE state.

Further illustrated in Figure 3C in step 345C is where the communication device may transmit a confirmation of the modification of the network indicated SW version.

An example of modifying a SW version may comprise the communication device receiving, a message with the below parameters:

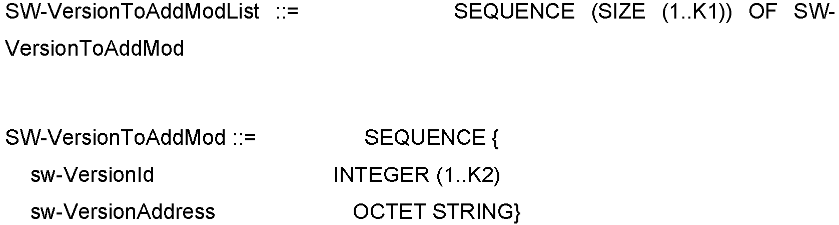

In the example above, the communication device may, for each sw-Versionld included in the SW-VersionToAddModList, replace an entry, if the entry with a matching sw-Versionld exists, for example in a sw-VersionIDList, within a VarSW-Version at the communication device, with the entry received for the matching sw- VersionlD. In the case a sw-Versionld does not exist, the communication device may add the sw-Versionld as a new entry within the VarSW-Version comprised within the data storage in the communication device.

In a further embodiment, not illustrated, the obtaining 320 step further comprises information indicating the communication device to activate or deactivate a network indicated SW version. Further, the communication device may as a response to the obtained instructions, perform the action to activate or deactivate the indicated SW version.

In a further embodiment of the invention the activation and/or deactivation is triggered by the occurrence of an event. Such an event may be the reception of a specific message, from the network node, for example a message indicating the communication device shall transition to another state, e.g. RRC_IDLE, RRC_INACTIVE. For example, the message received may be an RRCRelease message, then SW versions associated to RRC_Connect may be deactivated. Further, SW versions associated to RRC_IDLE and/or RRC_INACTIVE may be activated.

In a further embodiment, wherein the communication device is not compatible with at least one of the network indicated SW version to be activated, or added, or the patched version of the network indicated SW version, the non-compatible network indicated SW version is deactivated or deleted. Further, the obtaining 320 an indication of SW version may comprise determining if the network indicated SW version is not compatible with the communication device. If the network indicated SW version is not compatible with the communication device, the communication device may transmit an indication, to the network node, indicating that the communication device does not support the network indicated SW. Optionally, the communication device may perform a fallback procedure, e.g. activate another, compatible SW version that is currently stored on the communication device. If the network indicated SW is compatible with the communication device the communication device may transmit an indication of the compatibility to the network node, for example in an acknowledge message.

As used herein the obtaining, receiving and/or transmitting may comprise the obtaining, receiving and/or transmitting as any one or more of RRC message, NAS message, MAC Control Element protocol message, an Over the Top application message, a message from a network node such as a response message, an acknowledgement message, a confirmation message or as part of signaling procedure such as any one or more of an initial registration with a network, a registration area update, an initial attachment.

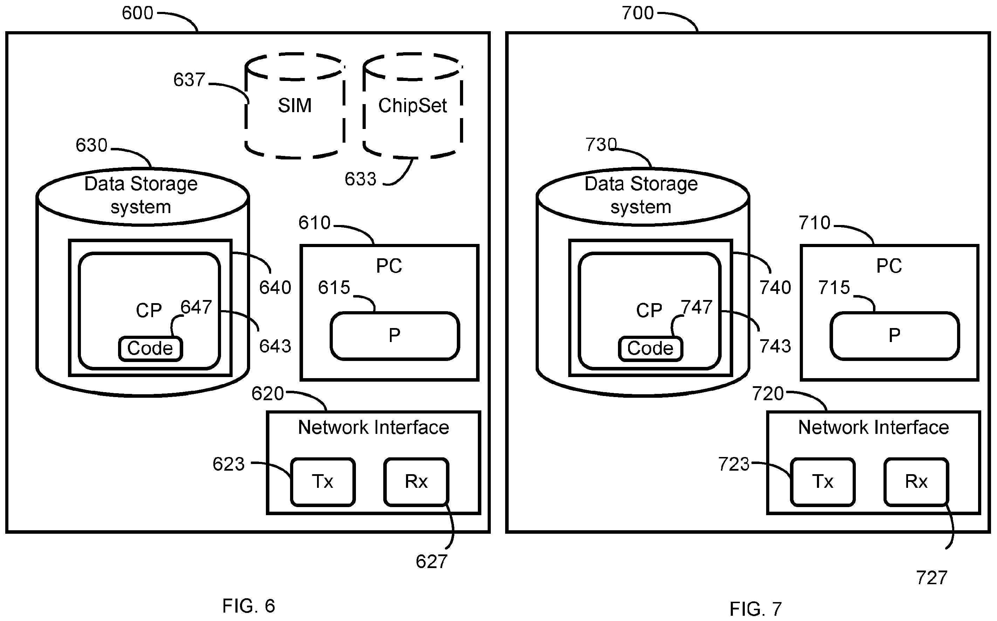

Figure 6 illustrates a block diagram of an embodiment of a communication device 600. As shown in Figure 6 communication device 600 comprises processing circuity 610 which includes one or more processors 615, e.g. any one of, a general purpose microprocessor, and/or one or more data processing circuits, such as an application specific integrated circuits, and field-programmable gate arrays, which processors may be located in a single housing or data center or which may be geographically distributed. The communication device in some embodiments further includes a network interface 620, comprising a transmitter 623 and/or a receiver 627 for enabling the communication device to transmit data to and receive data from nodes connect to a network. Moreover, the transmitter 623 and receiver 627 may be coupled to one or more antennas and may share circuit components, software or firmware, (for example, in a joint transceiver implementation) or alternatively be implemented separately. The communication device further comprises a data storage system 630 which may include one or more non-volatile storage devices and/or one or more volatile storage devices. The data storage system 630 further comprises a computer program product 640 in the form of a data storage for storing information, which may include one or more computer readable storage medium in the form of non-volatile memories, and/or one or more volatile memories such as random-access memory, for example storage on a chip-set 633 or a SIM 637. The computer program product comprises a computer program 643, which comprises computer instructions or code 647. The computer readable storage medium can be a non-transitory computer readable medium such as, a magnetic media where a hard disk is an example thereof, optical media, such as a DVD, and a flash memory. The computer instructions of the computer program are configured such that when executed by computer the computer instructions cause the computer to perform some or all of the functions and operations described herein.

Figure 7 illustrates a block diagram of an embodiment of a network node 700. As shown in Figure 7 network node 700 comprises processing circuity 710 which includes one or more processors 715, e.g. any one of, a general purpose microprocessor, and/or one or more data processing circuits, such as an application specific integrated circuits, and field-programmable gate arrays, which processors may be located in a single housing or data center or which may be geographically distributed. The network node in some embodiments further includes a network interface 720, comprising a transmitter 723 and a receiver 727 for enabling the network node to transmit data to and receive data from other nodes connect to a network. Moreover, the transmitter 723 and receiver 727 may be coupled to one or more antennas and may share circuit components, software or firmware, (for example in a joint transceiver implementation) or alternatively be implemented separately. The network node further comprises a data storage system 730 which may include one or more non-volatile storage devices and/or one or more volatile storage devices. The data storage system 730 of Figure 7 comprises a computer program product 740 in the form of a data storage for storing information, which may include one or more computer readable storage medium in the form of non-volatile memories, and/or one or more volatile memories such as random access memory. The computer program product comprises a computer program 743, which comprises computer instructions or code 747. The computer readable storage medium can be a non-transitory computer readable medium such as, a magnetic media where a hard disk is an example thereof, optical media, such as a DVD, and a flash memory. The computer instructions of the computer program are configured such that when executed by computer the computer instructions cause the computer to perform some or all the functions and operations described herein.

As used herein, the term "protocol stack" may refer to a set of one or more protocol(s) and/or protocol function(s) at an entity in a mobile network, such as a communication device, and/or a network node (like a gNodeB, eNodeB, CU-eNodeB, DU-eNodeB, AMF, SMF, MME, etc.).

The term "protocol stack SW" refers to a data file comprising a SW (possibly running or just stored) that when executed enable the entity where the SW is executed to run protocol functions. SW versioning is a way to categorize the unique states of SW as it is developed and released. The version identifier can be a word, or a number, or both. For example, a protocol stack SW version or SW version may refer to a whole protocol stack for a given interface e.g. a protocol stack for an NR air interface may include RRC, PDCP, MAC, RLC etc. In that case, the communication device could have multiple versions, one per RAT, for example (e.g. one SW version for LTE, another for NR). Each of them could be independently added, modified, removed, activated, deactivated, replaced, etc. Further, a protocol stack SW version or SW version may refer to one specific protocol in a protocol stack, such as the Radio Resource Control (RRC) protocol, or Non-Access Stratum (NAS) protocol. Even further, a protocol stack SW version or SW version may refer to one specific function within a protocol in a protocol stack, such as a specific Radio Resource Control (RRC) protocol function, like measurement configuration and reporting and/or functionality (e.g. a content to be included in a message to be transmitted upon a given event), wherein the functionality is the inclusion of information (e.g. movement sensor) in a measurement report when triggered by event A3. Further, a protocol stack SW version or SW version may refer to a specific protocol state e.g. RRC_IDLE, RRD_CONNECTED within a protocol in a protocol stack, such as Radio Resource Control (RRC) protocol.

In an embodiment, a single SW version is activated at a time (e.g. per Radio Access Technology (RAT)). For example, a communication device may have multiple SW version for a given RAT (e.g. New Radio (NR)), and one is currently activated. Then, a network may decide to activate another SW version, among the SW versions stored in the communication device, relating to NR. After which, the SW version running, may be deactivated. This may correspond to a SW version switching operation, for a given SW version type (per RAT).

In another embodiment, multiple SW versions are activated (e.g. running) at the same time at the communication device (e.g. a SW version associated to a function for mobility, and another SW version associated to a function for connection control).

As used herein, a SIM could be a Universal Sim (USIM) an embedded SIM (eSIM), in a Universal integrated circuit card (UICC) or other variants thereof coupled to a communication device. Furthermore, if the SIM has a data storage system on it, that data storage system may be the data storage system accessed by the communication device for storage of protocol SW version.

As used herein a network node may be a physical network device, such as in a radio access network device, a radio core network device, a distributed networks system node and, in some embodiments be a distributed network node such as computing platform (e.g. a cloud computing platform) node such as a server, an over-the-top server, or a virtual network node which can be implemented in a cloud.

It will be appreciated that the radio network node may refer to a base station as mentioned above, a base transceiver station, an access point, a network control node such as a network controller, a radio network controller, a base station controller, and the like or some combination thereof. The network node may, in an embodiment, be a modem, hub, bridge, switch or other data communication equipment, or a data terminal equipment such as a host computer. It will be appreciated that the network node can be arranged, capable, configured, and/or operable to communicate directly or indirectly with the communication device and/or with other network nodes.

As used herein the term communication device, which may be known as a "wireless terminal" or a "User Equipment" (UE), which may further refer to a mobile phone, a cellular phone, a Personal Digital Assistant (PDA), equipped with radio communications capabilities, a smart phone, iPAD, USB dongle e.g. with a radio modem, a laptop or personal computer, PC, equipped with an internal or external mobile broadband modem, a tablet PC with radio communication capabilities, laptop embedded equipment, a laptop mounted equipment, a device to device UE, a machine type UE or UE capable of machine to machine communications, customer premises equipment, a portable electronic radio communication device, a sensor device equipped with radio communication capabilities, a telematics unit within a vehicle, vehicle-mounted or vehicle embedded wireless devices, a VR headset, display, loudspeaker or other media delivery device or the like. In particular, the term "communication device" should be interpreted as non-limiting terms comprising any type of wireless device communicating with a radio network node in a cellular or a mobile communication system. As such a communication device may be any of a wide variety of communication devices, including wireless devices arranged, configured, and/or operable to communicate wirelessly with the network node.

The various embodiments described herein may be implemented in a recording medium readable by a computer or its similar device by employing for example, software, hardware or combinations thereof.

A software implementation of the embodiments described may be implemented as procedures and functions that may be implemented in separate modules and/or computer program parts, each of which is written to cause a computer system to perform one or more of the functions and operations described herein. Software codes may be implemented using a software application written in any suitable programming language.

In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components.

Some or all of the functions described herein may be implemented as virtual components executed by one or more virtual machines implemented in one or more virtual environments hosted by one or more of hardware nodes, such as a hardware computing device that operates as a network node, or as a communication device. Virtualizing my enable e.g. a network node to be a distributed network node wherein functions thereof are performed in a distributed environment as per virtualization process.

While various embodiments of the present disclosure are described herein, it should be understood that they have been presented by the way of example only, and not limitation. Thus, the breadth and scope of the present disclosure should not be limited by any of the above-described exemplary embodiments. Moreover, any combination of the above-described elements in all possible variations thereof is comprised by the disclosure unless otherwise indicated herein or otherwise clearly contradicted by context. Additionally, while the processes described above and illustrated in the drawings are shown as a sequence of steps this was done for the sake of illustration. It is contemplated that some steps may be added, some steps omitted, the order of the steps may be re-arranged, and some steps may be performed in parallel.

## Claims

1. A method (300) performed by a communication device (600) for managing a software, SW, version of a software-defined communication protocol stack in the communication device, wherein the SW version corresponds to an implementation of one or more functions in the communication protocol stack, or an implementation of one or more protocols in the communication protocol stack, the method comprising:
providing (310) an indication, to a network node (700), of at least one SW version stored in the communication device, wherein at least two SW versions are stored in the communication device in relation to a same subscriber identity module, SIM;
obtaining (320) an instruction comprising an indication of at least one SW version and an instruction for at least one managing action to be performed on the at least one SW version, from the network node (700);
performing (340) the at least one managing action; and
transmitting (345, 345A, 345B, 345C) an acknowledgment message, acknowledging the managing actions to be performed or acknowledging that the managing actions have been performed.

2. A communication device (600) for managing a software, SW, version of a software-defined communication protocol stack, at the communication device, wherein the SW version corresponds to an implementation of one or more functions in the communication protocol stack, or an implementation of one or more protocols in the communication protocol stack, the communication device, adapted to store at least two software versions in relation to a same subscriber identity module, SIM, comprises:
a processor (615)
a transceiver (620); and
a memory (630) storing instructions that, when executed by the processor, cause the communication device to:
provide (310) an indication, to a network node (700), of at least one SW version stored in the communication device, wherein at least two SW versions are stored in the communication device in relation to a same subscriber identity module, SIM;
obtain (320) an instruction comprising an indication of at least one SW version and an instruction for at least one managing action to be performed on the at least one SW version, from the network node;
perform (340) the at least one managing action; and
transmit (345, 345A, 345B, 345C) an acknowledgment message, acknowledging the managing actions to be performed or acknowledging that the managing actions have been performed.

3. The communication device (600) of claim 2, wherein to obtain (320) the indication of at least one SW version, to obtain (313A, 313C) at least one SW version or parameter, and/or to provide (310) an indication, uses any one of a RRC message, a NAS message, a MAC Control Element protocol Message and an Over the Top application message.

4. The communication device (600) of any one of claims 2-3, wherein the SW version comprises one or more of a protocol stack SW version, a specific protocol in a protocol stack SW version, a version of a specific function within a protocol, a version of a specific functionality within a protocol, a version of a specific protocol state and a communication device firmware version.

5. The communication device of any one of claims 2-4, wherein to obtain the indication of the at least one SW version comprises to obtain a list, wherein an element of the list comprises a SW version identifier and an element of the list comprises an associated SW version or address location of the at least one network indicated SW version.

6. The communication device (600) of any one of claims 2-5, wherein the SW versions are stored in a chipset (633) or in a SIM card (637) in the communication device.

7. A method (400) performed by a network node (700) for managing a software, SW, version of a software-defined communication protocol stack, of a software associated with a communication device, wherein the SW version corresponds to an implementation of one or more functions in the communication protocol stack, or an implementation of one or more protocols in the communication protocol stack, the method comprising:
obtaining (410) an indication, from a communication device (600), of at least one SW version stored in the communication device (600), wherein at least two SW versions are stored in the communication device in relation to the same subscriber identity module, SIM;
providing (420), to the communication device (600), an instruction comprising an indication of a least one SW version and an instruction for at least one managing action to be performed on the at least one SW version; and
obtaining (435) an acknowledgement message, in response to the provided instruction for at least one managing action to be performed by the communication device (600) on the at least one SW version.

8. The method of claim 7, wherein the provided instruction for at least one managing action to be performed comprises an instruction to perform an action to add, delete, modify, activate or deactivate the at least one network indicated SW version.

9. The method according to any one of claims 8-9 wherein the indication of at least one SW version indicates an available SW version the communication device is currently utilizing; and the instruction for at least one managing action to be performed comprises an instruction for at least one action to reset the functionality associated with the network indicated SW.

10. The method according to any one of claims 7-9 wherein the indication of the network indicated SW version comprises a SW version identifier.

11. A network node (700) for managing a software version of a software of a software-defined communication protocol stack associated with a communication device, wherein the SW version corresponds to an implementation of one or more functions in the communication protocol stack, or an implementation of one or more protocols in the communication protocol stack, the network node (700) comprises:
a processor (715);
a transceiver (720); and
a memory (730) storing instructions that, when executed by the processor, cause the network node to:
obtain (410) an indication, from a communication device (600), of at least one SW version stored in the communication device (600), wherein at least two SW versions are stored in the communication device in relation to a same subscriber identity module, SIM;
provide (420), to a communication device, an instruction comprising an indication of at least one SW version, and an instruction for at least one managing action to be performed by a communication device (600) on the at least one SW version; and
obtain (435) an acknowledgement message, in response to the provided instruction for at least one managing action to be performed by the communication device (600) on the at least one SW version.

12. A computer program (643) comprising program code (647) to be executed by at least one processor (615) of a communication device (600), whereby the execution of the program code (647) causes the communication device (600) to perform operations according to a method of claim 1.

13. A computer program (743) comprising program code (747) to be executed by at least one processor (715) of a network node (700) whereby the execution of the program code (743) causes the network node to perform operations according to a method of any one of claims 7-10.

## Patentansprüche

1. Verfahren (300), das von einer Kommunikationsvorrichtung (600) durchgeführt wird, zur Verwaltung einer Softwareversion, SW-Version, eines softwaredefinierten Kommunikationsprotokollstapels in der Kommunikationsvorrichtung, wobei die SW-Version einer Implementierung einer oder mehrerer Funktionen in dem Kommunikationsprotokollstapel oder einer Implementierung eines oder mehrerer Protokolle in dem Kommunikationsprotokollstapel entspricht, wobei das Verfahren Folgendes umfasst:
Bereitstellen (310) einer Angabe mindestens einer SW-Version, die in der Kommunikationsvorrichtung gespeichert ist, an einen Netzwerkknoten (700), wobei mindestens zwei SW-Versionen in Bezug auf ein gleiches Teilnehmeridentitätsmodul, SIM, in der Kommunikationsvorrichtung gespeichert sind;
Erhalten (320) einer Anweisung, die eine Angabe mindestens einer SW-Version umfasst, und einer Anweisung für mindestens eine Verwaltungsmaßnahme, die an der ersten SW-Version durchgeführt werden soll, von dem Netzwerkknoten (700);
Durchführen (340) der mindestens einen Verwaltungsmaßnahme; und
Senden (345, 345A, 345B, 345C) einer Bestätigungsnachricht, die die durchzuführenden Verwaltungsmaßnahmen bestätigt oder bestätigt, dass die Verwaltungsmaßnahmen durchgeführt wurden.

2. Kommunikationsvorrichtung (600) zum Verwalten einer Softwareversion, SW-Version, eines softwaredefinierten Kommunikationsprotokollstapels an der Kommunikationsvorrichtung, wobei die SW-Version einer Implementierung einer oder mehrerer Funktionen in dem Kommunikationsprotokollstapel oder einer Implementierung eines oder mehrerer Protokolle in dem Kommunikationsprotokollstapel entspricht, wobei die Kommunikationsvorrichtung, die dazu ausgelegt ist, zwei Softwareversionen in Bezug auf ein gleiches Teilnehmeridentitätsmodul, SIM, zu speichern, Folgendes umfasst:
einen Prozessor (615);
einen Sendeempfänger (620); und
einen Speicher (630), der Anweisungen speichert, die bei Ausführung durch den Prozessor die Kommunikationsvorrichtung zu Folgendem veranlassen:
Bereitstellen (310) einer Angabe mindestens einer SW-Version, die in der Kommunikationsvorrichtung gespeichert ist, an einen Netzwerkknoten (700), wobei mindestens zwei SW-Versionen in Bezug auf ein gleiches Teilnehmeridentitätsmodul, SIM, in der Kommunikationsvorrichtung gespeichert sind;
Erhalten (320) einer Anweisung, die eine Angabe mindestens einer SW-Version umfasst, und einer Anweisung für mindestens eine Verwaltungsmaßnahme, die an der ersten SW-Version durchgeführt werden soll, von dem Netzwerkknoten;
Durchführen (340) der mindestens einen Verwaltungsmaßnahme; und
Senden (345, 345A, 345B, 345C) einer Bestätigungsnachricht, die die durchzuführenden Verwaltungsmaßnahmen bestätigt oder bestätigt, dass die Verwaltungsmaßnahmen durchgeführt wurden.

3. Kommunikationsvorrichtung (600) nach Anspruch 2, wobei zum Erhalten (320) der Angabe mindestens einer SW-Version, Erhalten (313A, 313C) mindestens einer SW-Version oder eines SW-Parameters und/oder Bereitstellen (310) einer Angabe eines von einer RRC-Nachricht, einer NAS-Nachricht, einer MAC-Steuerelementprotokollnachricht und einer Over-the-Top-Anwendungsnachricht verwendet wird.

4. Kommunikationsvorrichtung (600) nach einem der Ansprüche 2-3, wobei die SW-Version eines oder mehrere von einer Protokollstapel-SW-Version, einem spezifischen Protokoll in einer Protokollstapel-SW-Version, einer Version einer spezifischen Funktion innerhalb eines Protokolls, einer Version einer spezifischen Funktionalität innerhalb eines Protokolls, einer Version eines spezifischen Protokollzustands und einer Firmwareversion der Kommunikationsvorrichtung umfasst.

5. Kommunikationsvorrichtung nach einem der Ansprüche 2-4, wobei das Erhalten der Angabe der mindestens einen SW-Version Erhalten einer Liste umfasst, wobei ein Element der Liste eine SW-Versionskennung umfasst und ein Element der Liste eine assoziierte SW-Version oder Adresse der mindestens einen im Netzwerk angegebenen SW-Version umfasst.

6. Kommunikationsvorrichtung (600) nach einem der Ansprüche 2-5, wobei die SW-Versionen in einem Chipsatz (633) oder in einer SIM-Karte (637) in der Kommunikationsvorrichtung gespeichert sind.

7. Verfahren (400), das von einem Netzwerkknoten (700) durchgeführt wird, zur Verwaltung einer Softwareversion, SW-Version, einer Software eines softwaredefinierten Kommunikationsprotokollstapels, die mit einer Kommunikationsvorrichtung assoziiert ist, wobei die SW-Version einer Implementierung einer oder mehrerer Funktionen in dem Kommunikationsprotokollstapel oder einer Implementierung eines oder mehrerer Protokolle in dem Kommunikationsprotokollstapel entspricht, wobei das Verfahren Folgendes umfasst:
Erhalten (410) einer Angabe mindestens einer SW-Version, die in der Kommunikationsvorrichtung (600) gespeichert ist, von einer Kommunikationsvorrichtung (600), wobei mindestens zwei SW-Versionen in Bezug auf das gleiche Teilnehmeridentitätsmodul, SIM, in der Kommunikationsvorrichtung gespeichert sind;
Bereitstellen (420) einer Anweisung, die eine Angabe mindestens einer SW-Version umfasst, und einer Anweisung für mindestens eine Verwaltungsmaßnahme, die an der mindestens einen SW-Version durchgeführt werden soll, an die Kommunikationsvorrichtung (600); und
Erhalten (435) einer Bestätigungsnachricht in Reaktion auf die bereitgestellte Anweisung für mindestens eine Verwaltungsmaßnahme, die von der Kommunikationsvorrichtung (600) an der mindestens einen SW-Version durchgeführt werden soll.

8. Verfahren nach Anspruch 7, wobei die bereitgestellte Anweisung für mindestens eine durchzuführende Verwaltungsmaßnahme eine Anweisung zum Durchführen einer Maßnahme zum Hinzufügen, Löschen, Modifizieren, Aktivieren oder Deaktivieren der mindestens einen im Netzwerk angegebenen SW-Version umfasst.

9. Verfahren nach einem der Ansprüche 8-9, wobei die Angabe mindestens einer SW-Version eine verfügbare SW-Version angibt, die die Kommunikationsvorrichtung derzeit verwendet; und die Anweisung für mindestens eine durchzuführende Verwaltungsmaßnahme eine Anweisung für mindestens eine Maßnahme zum Zurücksetzen der Funktionalität umfasst, die mit der im Netzwerk angegebenen SW assoziiert ist.

10. Verfahren nach einem der Ansprüche 7-9, wobei die Angabe der im Netzwerk angegebenen SW-Version eine SW-Versionskennung umfasst.

11. Netzwerkknoten (700) zum Verwalten einer Softwareversion einer Software eines softwaredefinierten Kommunikationsprotokollstapels, die mit einer Kommunikationsvorrichtung assoziiert ist, wobei die SW-Version einer Implementierung einer oder mehrerer Funktionen in dem Kommunikationsprotokollstapel oder einer Implementierung eines oder mehrerer Protokolle in dem Kommunikationsprotokollstapel entspricht, wobei der Netzwerkknoten (700) Folgendes umfasst:
einen Prozessor (715);
einen Sendeempfänger (720); und
einen Speicher (730), der Anweisungen speichert, die bei Ausführung durch den Prozessor den Netzwerkknoten zu Folgendem veranlassen:
Erhalten (410) einer Angabe mindestens einer SW-Version, die in der Kommunikationsvorrichtung (600) gespeichert ist, von einer Kommunikationsvorrichtung (600), wobei mindestens zwei SW-Versionen in Bezug auf ein gleiches Teilnehmeridentitätsmodul, SIM, in der Kommunikationsvorrichtung gespeichert sind;
Bereitstellen (420) einer Anweisung, die eine Angabe mindestens einer SW-Version umfasst, und einer Anweisung für mindestens eine Verwaltungsmaßnahme, die von der Kommunikationsvorrichtung (600) an der mindestens einen SW-Version durchgeführt werden soll, an eine Kommunikationsvorrichtung; und
Erhalten (435) einer Bestätigungsnachricht in Reaktion auf die bereitgestellte Anweisung für mindestens eine Verwaltungsmaßnahme, die von der Kommunikationsvorrichtung (600) an der mindestens einen SW-Version durchgeführt werden soll.

12. Computerprogramm (643), umfassend Programmcode (647), der von mindestens einem Prozessor (615) einer Kommunikationsvorrichtung (600) ausgeführt werden soll, wobei die Ausführung des Programmcodes (647) die Kommunikationsvorrichtung (600) zum Durchführen von Operationen gemäß einem Verfahren nach Anspruch 1 veranlasst.

13. Computerprogrammprodukt (743), umfassend Programmcode (747), der von mindestens einem Prozessor (715) eines Netzwerkknotens (700) ausgeführt werden soll, wobei die Ausführung des Programmcodes (747) den Netzwerkknoten zum Durchführen von Operationen gemäß einem Verfahren nach einem der Ansprüche 7-10 veranlasst.

## Revendications

1. Procédé (300) réalisé par un dispositif de communication (600) pour gérer une version de logiciel, SW, d'une pile de protocoles de communication définie par logiciel dans le dispositif de communication, dans lequel la version SW correspond à une mise en œuvre d'une ou plusieurs fonctions dans la pile de protocoles de communication, ou à une mise en œuvre d'un ou plusieurs protocoles dans la pile de protocoles de communication, le procédé comprenant :
la fourniture (310), à un nœud de réseau (700), d'une indication d'au moins une version SW stockée dans le dispositif de communication, dans lequel au moins deux versions SW sont stockées dans le dispositif de communication en relation avec un même module d'identité d'abonné, SIM ;
l'obtention (320) d'une instruction comprenant une indication d'au moins une version SW et d'une instruction pour au moins une action de gestion à réaliser sur l'au moins une version SW, à partir du nœud de réseau (700) ;
la réalisation (340) de l'au moins une action de gestion ; et
la transmission (345, 345A, 345B, 345C) d'un message d'accusé de réception acquittant les actions de gestion à réaliser ou acquittant que les actions de gestion ont été réalisées.

2. Dispositif de communication (600) pour gérer une version de logiciel, SW, d'une pile de protocoles de communication définie par logiciel, au niveau du dispositif de communication, dans lequel la version SW correspond à une mise en œuvre d'une ou plusieurs fonctions dans la pile de protocoles de communication, ou à une mise en œuvre d'un ou plusieurs protocoles dans la pile de protocoles de communication, le dispositif de communication, adapté pour stocker au moins deux versions logicielles en relation avec un même module d'identité d'abonné, SIM, comprend :
un processeur (615) ;
un émetteur-récepteur (620) ; et
une mémoire (630) stockant des instructions qui, lorsqu'elles sont exécutées par le processeur, amènent le dispositif de communication à :
fournir (310), à un nœud de réseau (700), une indication d'au moins une version SW stockée dans le dispositif de communication, dans lequel au moins deux versions SW sont stockées dans le dispositif de communication en relation avec un même module d'identité d'abonné, SIM ;
obtenir (320) une instruction comprenant une indication d'au moins une version SW et une instruction pour au moins une action de gestion à réaliser sur l'au moins une version SW, à partir du nœud de réseau ;
réaliser (340) l'au moins une action de gestion ; et
transmettre (345, 345A, 345B, 345C) un message d'accusé de réception acquittant les actions de gestion à réaliser ou acquittant que les actions de gestion ont été réalisées.

3. Dispositif de communication (600) selon la revendication 2, dans lequel, pour obtenir (320) l'indication d'au moins une version SW, pour obtenir (313A, 313C) au moins une version SW ou un paramètre, et/ou pour fournir (310) une indication, le dispositif de communication utilise l'un quelconque parmi un message RRC, un message NAS, un message de protocole d'élément de commande MAC et un message d'application Over the Top.

4. Dispositif de communication (600) selon l'une quelconque des revendications 2 et 3, dans lequel la version SW comprend une ou plusieurs parmi une version SW de pile de protocoles, un protocole spécifique dans une version SW de pile de protocoles, une version d'une fonction spécifique à l'intérieur d'un protocole, une version d'une fonctionnalité spécifique à l'intérieur d'un protocole, une version d'un état de protocole spécifique et une version de micrologiciel de dispositif de communication.

5. Dispositif de communication selon l'une quelconque des revendications 2 à 4, dans lequel, pour obtenir l'indication de l'au moins une version SW, le dispositif de communication comprend l'obtention d'une liste, dans lequel un élément de la liste comprend un identifiant de version SW et un élément de la liste comprend une version SW associée ou un emplacement d'adresse de l'au moins une version SW indiquée par le réseau.

6. Dispositif de communication (600) selon l'une quelconque des revendications 2 à 5, dans lequel les versions SW sont stockées dans un chipset (633) ou dans une carte SIM (637) dans le dispositif de communication.

7. Procédé (400) réalisé par un nœud de réseau (700) pour gérer une version de logiciel, SW, d'une pile de protocoles de communication définie par logiciel d'un logiciel associé à un dispositif de communication, dans lequel la version SW correspond à une mise en œuvre d'une ou plusieurs fonctions dans la pile de protocoles de communication, ou à une mise en œuvre d'un ou plusieurs protocoles dans la pile de protocoles de communication, le procédé comprenant :
l'obtention (410), à partir d'un dispositif de communication (600), d'une indication d'au moins une version SW stockée dans le dispositif de communication (600), dans lequel au moins deux versions SW sont stockées dans le dispositif de communication en relation avec le même module d'identité d'abonné, SIM ;
la fourniture (420), au dispositif de communication (600), d'une instruction comprenant une indication d'au moins une version SW et d'une instruction pour au moins une action de gestion à réaliser sur l'au moins une version SW ; et
l'obtention (435) d'un message d'accusé de réception, en réponse à l'instruction fournie, pour au moins une action de gestion à réaliser par le dispositif de communication (600) sur l'au moins une version SW.

8. Procédé selon la revendication 7, dans lequel l'instruction fournie pour au moins une action de gestion à réaliser comprend une instruction pour réaliser une action consistant à ajouter, supprimer, modifier, activer ou désactiver l'au moins une version SW indiquée par le réseau.

9. Procédé selon l'une quelconque des revendications 8 et 9, dans lequel l'indication d'au moins une version SW indique une version SW disponible en cours d'utilisation par le dispositif de communication ; et l'instruction pour au moins une action de gestion à réaliser comprend une instruction pour au moins une action consistant à réinitialiser la fonctionnalité associée à la version SW indiquée par le réseau.

10. Procédé selon l'une quelconque des revendications 7 à 9, dans lequel l'indication de la version SW indiquée par le réseau comprend un identifiant de version SW.

11. Nœud de réseau (700) pour gérer une version de logiciel d'un logiciel d'une pile de protocoles de communication définie par logiciel associée à un dispositif de communication, dans lequel la version SW correspond à une mise en œuvre d'une ou plusieurs fonctions dans la pile de protocoles de communication, ou à une mise en œuvre d'un ou plusieurs protocoles dans la pile de protocoles de communication, le nœud de réseau (700) comprend :
un processeur (715) ;
un émetteur-récepteur (720) ; et
une mémoire (730) stockant des instructions qui, lorsqu'elles sont exécutées par le processeur, amènent le nœud de réseau à :
obtenir (410), à partir d'un dispositif de communication (600), une indication d'au moins une version SW stockée dans le dispositif de communication (600), dans lequel au moins deux versions SW sont stockées dans le dispositif de communication en relation avec un même module d'identité d'abonné, SIM ;
fournir (420), à un dispositif de communication, une instruction comprenant une indication d'au moins une version SW et une instruction pour au moins une action de gestion à réaliser par un dispositif de communication (600) sur l'au moins une version SW ; et
obtenir (435) un message d'accusé de réception, en réponse à l'instruction fournie, pour au moins une action de gestion à réaliser par le dispositif de communication (600) sur l'au moins une version SW.

12. Programme informatique (643) comprenant un code de programme (647) à exécuter par au moins un processeur (615) d'un dispositif de communication (600), selon lequel l'exécution du code de programme (647) amène le dispositif de communication (600) à réaliser des opérations conformément à un procédé selon la revendication 1.

13. Programme informatique (743) comprenant un code de programme (747) à exécuter par au moins un processeur (715) d'un nœud de réseau (700), selon lequel l'exécution du code de programme (747) amène le nœud de réseau à réaliser des opérations conformément à un procédé selon l'une quelconque des revendications 7 à 10.
